# EUROPEAN PATENT APPLICATION

(11) **EP 2 378 512 A2**
(43) Date of publication of application: **19.10.2011**
(21) Application number: 11003210.9
(22) Date of filing: 15.04.2011
(51) Int. Cl.: G09G 5/00, H04N 5/60

(54) **Display device and controlling method thereof**

(30) Priority: 16.04.2010 TW 99112035
(71) Applicant: HannStar Display Corp., Wugu Dist. New Taipei City (TW)
(72) Inventor: Wang, Chao-Shin, New Taipei City (TW)
(74) Representative: Hager, Thomas Johannes

(57) **Abstract**

A controlling method of a display device includes the following steps. First, a time reference value, a plurality of preset period criteria and a plurality of operation mode data are stored in a memory unit (110), wherein each preset period criterion relates to each operation mode datum. Then, utilize a time controller (120) to read the time reference value and a plurality of preset period criteria, compare the time reference value and a plurality of preset period criteria to determine the preset period criterion corresponding to the time reference value, and select the operation mode datum corresponding to the preset period criterion. Following that, utilize a micro-controller (130) to set a plurality of setting values of the display device according to the operation mode datum selected by the time controller (120).

## Description

The present invention relates to a display device and a controlling method thereof according to the pre-characterizing clause of claim 1.

An on-screen display (OSD) is widely applied in display devices, such as television sets, computer monitors, video cassette recorders or portable devices. Accordingly, the OSD reduces the number of controlling buttons needed on the display devices, decreases the chance of poor contact, and can store the setting values for convenience in use.

An on-screen display is configured to adjust the volume, brightness, or contrast of the display devices, and the adjustment options will show on the display device and overlap with the display image. However, the requirements for the setting values (such as volume or brightness) of the display device are different at different times, and a user needs to adjust the setting values. For example, if a display device (such as a television set) is turned on in the late evening and this display device previously had a louder volume before being turned off, then this display device will play with the last volume setting. But, since it is quieter in the late evening and the user's family may be sleeping, this unsuitable volume may force the user to quickly lower the volume, which is inconvenient for the user. Furthermore, in the process of the adjustment, the sound of the display device may have already affected the people in the surroundings. Or, the user may not notice that the volume is inappropriate, and the louder volume may affect the people in the surroundings.

This in mind, the present invention aims at providing a display device and a controlling method thereof to achieve the effect of comfort and power-saving.

This is achieved by a display device and a controlling method thereof according to claim 1. The dependent claims pertain to corresponding further developments and improvements.

As will be seen more clearly from the detailed description following below, the claimed display device includes a micro-controller, a time controller and a memory unit. The controlling method of the display device includes the following steps. First, a time reference value, a plurality of preset period criteria and a plurality of operation mode data are stored in the memory unit, wherein each preset period criterion relates to each operation mode datum. Then, utilize the time controller to read the time reference value and a plurality of preset period criteria, compare the time reference value and a plurality of preset period criteria to determine the preset period criterion corresponding to the time reference value, and select the operation mode datum corresponding to the preset period criterion. Following that, utilize a micro-controller to set a plurality of setting values of the display device according to the operation mode datum selected by the time controller.

In the following, the invention is further illustrated by way of example, taking reference to the accompanying drawings. Thereof:
- FIG. 1 and FIG 2: are function block diagrams illustrating the display device according to the preferred embodiment of the present invention.
- FIG. 3: is a flowchart illustrating the controlling method of the display device according to the preferred embodiment of the present invention.
- FIG. 4: is an operation flowchart of the display device according to the present invention.

In the following specifications and claims, certain terms are used throughout the description and following claims to refer to particular components. As one skilled in the art will appreciate, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to". Also, the term "electrically connect" is intended to mean either an indirect or direct electrical connection. Accordingly, if one device is coupled to another device, that connection may be through a direct electrical connection, or through an indirect electrical connection via other devices and connections.

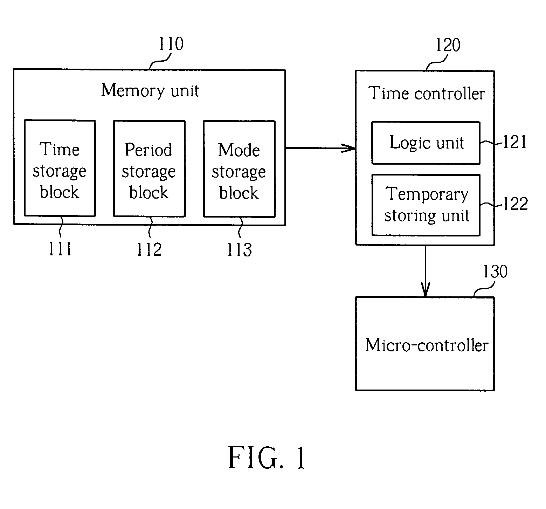

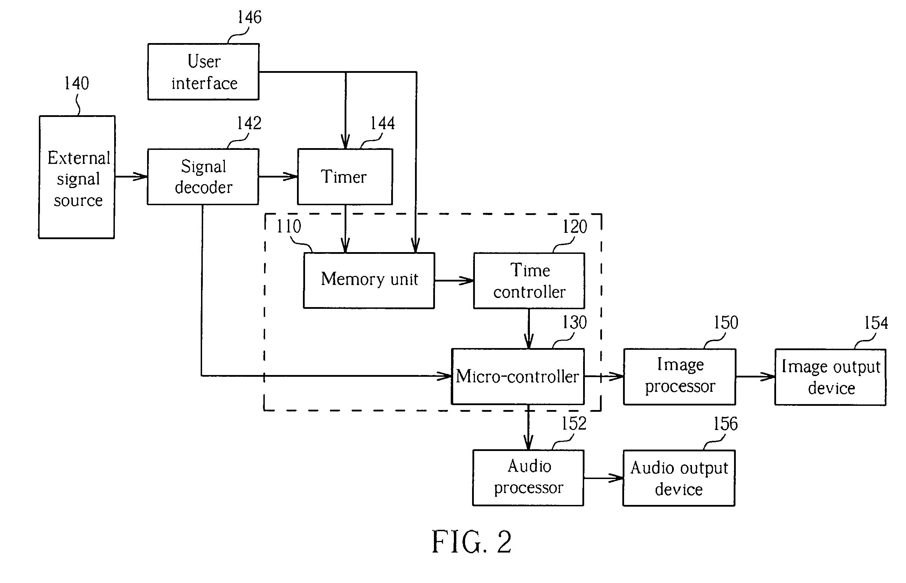

Please refer to FIG. 1 and FIG. 2. FIG. 1 and FIG. 2 are function block diagrams illustrating the display device according to the preferred embodiment of the present invention, wherein FIG. 1 is a detailed function block diagram of the area defined by the dotted frame in FIG. 2. As shown in FIG. 1, the display device includes a memory unit 110, a time controller 120 and a micro-controller 130. The memory unit 110 may include a time storage block 111, a period storage block 112 and a mode storage block 113. The time storage block 111 is configured to store a time reference value, the period storage block 112 is configured to store a plurality of the preset period criteria, and the mode storage block 113 is configured to store a plurality of the operation mode data. The time controller 120 is electrically connected to the memory unit 110, and the time controller 120 may include a logic unit 121 and a temporary storing unit 122. The logic unit 121 is configured to read the time reference value and a plurality of the preset period criteria from the memory unit 110, to determine the preset period criterion corresponding to the time reference value by comparing, and to select the operation mode datum corresponding to the preset period criterion. Then, this operation mode datum is stored in the temporary storing unit 122. The micro-controller 130 is electrically connected to the time controller 120, and the micro-controller 130 is configured to read the operation mode datum corresponding to the preset period criterion from the time controller 120 and to set a plurality of setting values of the display device according to the operation mode datum.

In addition, as shown in FIG. 2, the display device may include a signal decoder 142, a timer 144, a user interface 146, an image processor 150, an audio processor 152, an image output device 154 and an audio output device 156. The signal decoder 142 is configured to decode an external signal source 140 into image data, audio data or time data. The timer 144 is configured to count to a time value, and the user interface 146 is configured to show the adjustment option of image or audio on the display device, so that the user can adjust the setting values through the user interface 146. Moreover, the image processor 150 is configured to perform an image processing on the image data, and the audio processor 152 is configured to perform an audio processing on the audio data. Furthermore, the image output device 154 is configured to show the image data after the image processing, and the audio output device 156 is configured to show the audio data after the audio processing.

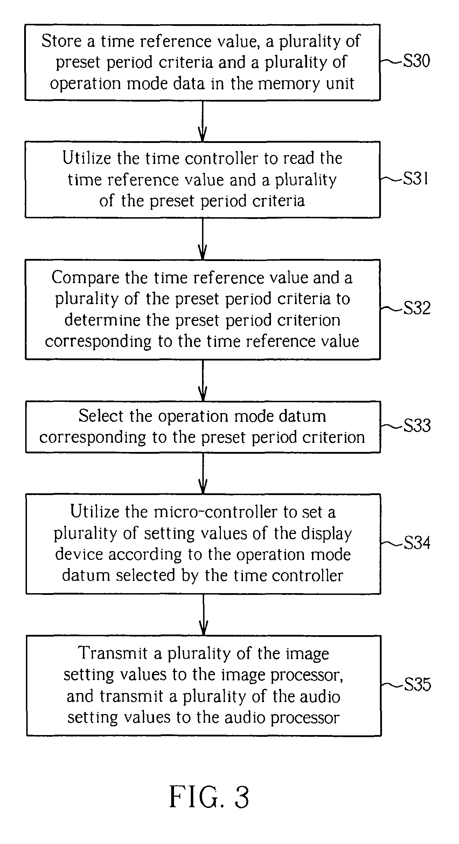

Please refer to FIGs. 1-3. FIG. 3 is a flowchart illustrating the controlling method of the display device according to the preferred embodiment of the present invention. As shown in FIG. 3, first, in step S30, a time reference value, a plurality of preset period criteria and a plurality of operation mode data are stored in the memory unit 110. More specifically, in the present preferred embodiment, the time reference value is stored in the time storage block 111 of the memory unit 110, a plurality of the preset period criteria is stored in the period storage block 112 of the memory unit 110, and a plurality of the operation mode data is stored in the mode storage block 113 of the memory unit 110. The time reference value may be utilized to express the present time, and each of the preset period criteria may be utilized to define a time range as a preset period. For example, in an embodiment, a first preset period criterion is utilized to define the time range from 10 pm to 6 am as a first preset period, a second preset period criterion is utilized to define the time range from 6 am to 2 pm as a second preset period, and a third preset period criterion is utilized to define the time range from 2 pm to 10 pm as a third preset period. But the time range is not limited to the time within one day and may be extend according to the demand. For example, the time range may be in a week (e.g. the time range from 10 pm on Monday to 6 am on Tuesday as a first preset period) or the time range may be in month (e.g. the time range from 10 pm at the first day of the month to 6 am at the second day of the month as a first preset period). Moreover, each of the operation mode data may represent may be utilized to define a plurality of the setting values of an operation mode, and each preset period criterion relates to each operation mode datum. For example, in an embodiment, a first operation mode datum may define the setting value of audio as 10, define the setting value of brightness as 5 and define the setting value of color temperature as cool, and a second operation mode datum may define the setting value of audio as 20, define the setting value of brightness as 7 and define the setting value of color temperature as standard. Moreover, the first preset period criterion relates to the first operation mode datum, and the second preset period criterion relates to the second operation mode datum.

Two methods of acquiring the time reference value are descried as follows, but the present invention is not limited herein and the time reference value can be received in another suitable method. As shown in FIG. 2, the first method of acquiring the time reference includes utilizing the signal decoder 142 to receive a time value from the external signal source 140 and then utilizing the timer 144 to count to the time value for generating the time reference value. For example, the external signal source 140 may provide a digital television (DTV) signal, and the DTV signal has a system time table (STT) for providing the information about date and time. Furthermore, the signal decoder 142 is utilized to acquire the time value from the system time table in the external signal source 140 and then utilizing the timer 144 to count to the time value for generating the time reference value. Accordingly, the display device utilizes the time value acquired from the external signal source 140 before turning off the display device, and the timer 144 is configured to count to the time value for generating the time reference value. When the display device is turned on again, this time reference value can be utilized. It should be noted that the external signal source 140 is not limited to provide the digital television signal, and the external signal source 140 may provide another digital signal or analog signal which has the data about the present time. In addition, the display device may also include an internet module (not shown in the figure). The internet module is connected to the Internet, and the time value corresponding to the present time may be acquired by the internet module through the Internet. Following that, as mentioned above, the timer 144 is utilized to count to the time value for generating the time reference value. On the other hand, the second method of acquiring the time reference includes utilizing the timer 144 to count to the time value, which is set by a user, for generating the time reference value. For example, the user may input the present time as a time value through the user interface 146, and then the timer 144 is utilized to count to the time value for generating the time reference value.

Moreover, the sources of a plurality of the preset period criteria and a plurality of the operation mode data may be acquired by two methods as follows, but it is not limited herein. In the first method, a plurality of the preset period criteria and a plurality of the operation mode data are preset data in the memory unit, wherein the preset data are set by the manufacturer of the display device. In the second method, a plurality of the preset period criteria and a plurality of the operation mode data are inputted into the memory unit 110 through a user interface. The user interface may be an on-screen display, but it is not limited herein and may be other suitable input interface. Accordingly, users may adjust a plurality of the preset period criteria or adjust each operation mode datum corresponding to each preset period criterion according to their personal requirement or living environment.

Then, as shown in FIG. 3 and FIG. 1, in step S31, the time controller 120 is utilized to read the time reference value and a plurality of preset period criteria from the memory unit 110. Subsequently, in step S32, the time reference value and a plurality of preset period criteria are compared to determine the preset period criterion corresponding to the time reference value. After that, in step S33, the operation mode datum corresponding to the preset period criterion is selected. In the present preferred embodiment, the logic unit 121 in the time controller 120 is utilized to read the time reference value and a plurality of the preset period criteria from the memory unit 110 and to compare the time reference value and a plurality of preset period criteria to determine the preset period criterion corresponding to the time reference value, and the operation mode datum corresponding to the preset period criterion is selected and saved in the temporary storing unit 122 of the time controller 120. Accordingly, in Step S31 to S33, the operation mode datum corresponding to the present time is selected according to the present time, such that the display device is operated based on this operation mode datum.

Following that, as shown in FIG. 3 and FIG. 1, in step S34, the micro-controller 130 is configured to set a plurality of the setting values of the display device according to the operation mode datum which is selected by the time controller 120. In the present preferred embodiment, a plurality of the setting values of the display device may include a plurality of image setting values and a plurality of audio setting values. For example, the image setting values may include contrast, brightness, tint, sharpness, color enhancement, color temperature, saturation, or backlight, and the audio setting values may include volume, balance, pitch, or equalizing effect. Accordingly, the micro-controller 130 may be utilized to read the operation mode datum corresponding to the present time from the temporary storing unit 122 of the time controller 120. Then, the operation mode datum is configured to set a plurality of the setting values of the display device, such as volume, brightness, or color temperature. In other words, in step S34, the operation mode of the display device is automatically set by the display device according to the present time, so that the display device may have different operation modes at different times to satisfy the requirement of the user.

Subsequently, as shown in FIG. 3 and FIG. 2, in step S35, a plurality of the image setting values is transmitted to the image processor 150, and a plurality of the audio setting values is transmitted to the audio processor 152. In the present preferred embodiment, the signal decoder 142 decodes the external signal source 140 into the image data and the audio data, and the image data and the audio data are transmitted to the micro-controller 130. Following that, the micro-controller 130 transmits a plurality of the image setting values and the image data to the image processor 150, and the image data are processed by the image processor 150 according to the image setting values. In the same way, the micro-controller 130 transmits a plurality of the audio setting values and the audio data to the audio processor 152, and the audio data are processed by the audio processor 152 according to the audio setting values. Then, the image data after being processed by the image processor 150 are displayed by the image output device 154, and the audio data after being processed by the audio processor 152 are played by the audio output device 156.

It should be noted that one of the objectives of the present invention is to automatically set each setting value of the display device according to the present time. Accordingly, the display device and the controlling method thereof are fully described. For example, the components (such as the memory unit 110, the time controller 120, the micro-controller 130, or the timer 144) of the display device and the relation between the components are described. In addition, which components are used to perform the controlling method and how to achieve the objective of the present invention are also described in detail.

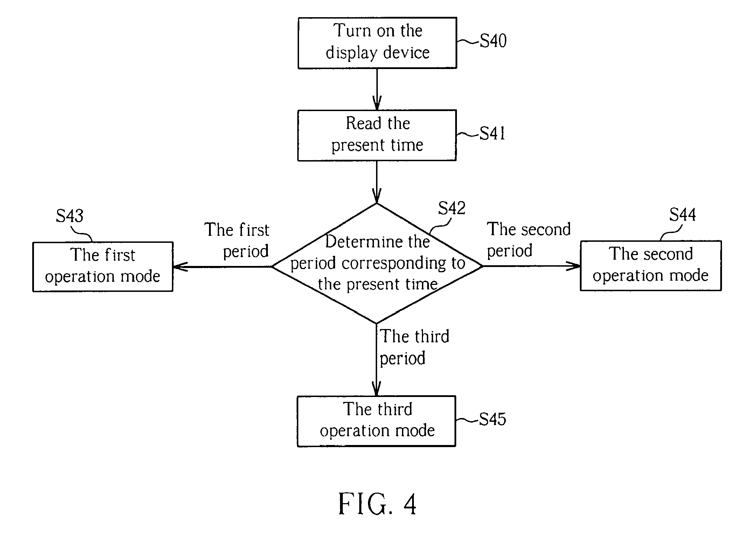

Please refer to FIG 4. FIG. 4 is an operation flowchart of the display device according to the present invention. As shown in FIG. 4, in step S40, the display device is turned on. Then, in step S41, the present time is read by the display device. More specifically, the present time may be the time reference value as mentioned above, and the acquiring method of the time reference value is as described above and repeated descriptions are not redundantly given. Subsequently, in step S42, the period corresponding to the present time is determined by the display device. For example, in FIG 4, the time range may be divided into a first period, a second period, and a third period, but it is not limited herein. Following that, the display device has different operation modes at different periods. In other words, if the present time belongs to the first period, the display device is operated in the first operation mode in step S43; if the present time belongs to the second period, the display device is operated in the second operation mode in step S44; and if the present time belongs to the third period, the display device is operated in the third operation mode in step S45. As described above, each operation mode may be set by the user or may be the preset mode in the display device. Accordingly, the setting values of the display device can be automatically set by the display device of the present invention.

In conclusion, in the display device and the controlling method thereof of the present invention, the setting values of the display device are automatically adjusted according to the present time, so that the display device can have different operation modes at different times. Accordingly, the requirement of the user can be satisfied to achieve the effect of comfort. For example, about the audio adjustment, the volume of the display device can be automatically turned down in the sleeping time of the user's family, so that the user's family will not be affected; about the image adjustment, due to the low light intensity in the late evening, the backlight of the display device can be automatically turned down in the late evening, so that the user will not be dazzled. Furthermore, the unnecessary waste of energy can be avoided to achieve the effect of power-saving. For example, about the audio adjustment, due to the quiet surroundings in the late evening, the volume to be fully heard in the late evening may be lower than that in the daytime, so that the volume of the display device can be automatically turned down to avoid the unnecessary waste of energy; in the same way, about the image adjustment, the backlight of the display device can be automatically turned down in the late evening to achieve the effect of power-saving. In addition, the operation mode datum corresponding to the preset period criterion can be adjusted according to the requirement of the user. Moreover, different setting values can be used according to different output devices of the display device, and the output device can have different operation modes at different times to satisfy the user requirements or to achieve the effect of power-saving.

All combinations and sub-combinations of the above-described features also belong to the invention.

## Claims

1. A controlling method of a display device, the display device comprising a micro-controller (130), a time controller (120) and a memory unit (110), the controlling method comprising:
storing a time reference value, a plurality of preset period criteria and a plurality of operation mode data in the memory unit (110), wherein each of the preset period criteria relates to each of the operation mode data;
utilizing the time controller (120) to read the time reference value and a plurality of the preset period criteria, comparing the time reference value and a plurality of the preset period criteria to determine the preset period criterion corresponding to the time reference value, and selecting the operation mode datum corresponding to the preset period criterion; and
utilizing the micro-controller (130) to set a plurality of setting values of the display device according to the operation mode datum selected by the time controller (120).

2. The controlling method of the display device of claim 1, wherein the display device further comprises a signal decoder (142) and a timer (144), and the controlling method further comprises utilizing the signal decoder (142) to receive a time value from an external signal source and then utilizing the timer (144) to count to the time value for generating the time reference value.

3. The controlling method of the display device of claim 1, wherein the display device further comprises a user interface (146) and a timer (144), and the controlling method further comprises inputting a time value through the user interface (146) and then utilizing the timer (144) to count to the time value for generating the time reference value.

4. The controlling method of the display device of claim 1, wherein a plurality of the preset period criteria and a plurality of the operation mode data are preset data in the memory unit (110).

5. The controlling method of the display device of claim 1, wherein a plurality of the preset period criteria and a plurality of the operation mode data are inputted into the memory unit (110) through a user interface (146).

6. The controlling method of the display device of claim 1, wherein a plurality of the setting values of the display device comprise a plurality of the image setting values, and the image setting values comprise contrast, brightness, tint, sharpness, color enhancement, color temperature, saturation, or backlight.

7. The controlling method of the display device of claim 6, wherein the display device further comprises an image processor (150), and the controlling method further comprises transmitting a plurality of the image setting values to the image processor (150).

8. The controlling method of the display device of claim 1, wherein a plurality of the setting values of the display device comprise a plurality of the audio setting values, and the audio setting values comprise volume, balance, pitch, or equalizing effect.

9. A display device, comprising:
a memory unit (110), wherein a time reference value, a plurality of preset period criteria and a plurality of operation mode data are stored in the memory unit (110);
a time controller (120), electrically connected to the memory unit (110), the time controller (120) comprising a logic unit (121) and a temporary storing unit (122), wherein the logic unit (121) is configured to read the time reference value and a plurality of the preset period criteria, to determine the preset period criterion corresponding to the time reference value by comparing, and to select the operation mode datum corresponding to the preset period criterion, the temporary storing unit (122) being configured to store the operation mode datum; and
a micro-controller (130), electrically connected to the time controller (120), wherein the micro-controller (130) is configured to set a plurality of setting values of the display device.

10. The display device of claim 9, further comprising a signal decoder (142), wherein the signal decoder (142) is configured to receive a time value from an external signal source.

11. The display device of claim 10, further comprising a timer (144), wherein the timer (144) is configured to count to the time value for generating the time reference value.

12. The display device of claim 9, further comprising a user interface (146), wherein the user interface (146) is configured to input the time value or a plurality of the preset period criteria.

13. The display device of claim 12, further comprising a timer (144), wherein the timer (144) is configured to count to the time value for generating the time reference value.

14. The display device of claim 9, further comprising an audio processor (152).
